# EUROPEAN PATENT APPLICATION

(11) **EP 2 200 144 A1**
(43) Date of publication of application: **23.06.2010**
(21) Application number: 08022144.3
(22) Date of filing: 19.12.2008
(51) Int. Cl.: H02J 3/28, H02J 3/48, H02J 15/00

(54) **Arrangement to stabilise an electric power grid**

(71) Applicant: Siemens Aktiengesellschaft, 80333 München (DE)
(72) Inventor: Wolf, Erik, 91341 Röttenbach (DE)

(57) **Abstract**

The invention relates to an arrangement to stabilise a power-grid. The grid is coupled with a power-system via an inverter-system, while the power-system feeds in electrical power into the grid when needed. A synchronous generator is connected with the grid. The synchronous generator is designed to compensate sudden load-changes of the grid.

## Description

The invention relates to an arrangement to stabilise a power-grid.

It relates especially to a grid, which is fed to a certain extend by power-systems, being coupled with the grid via inverter-systems.

This kind of power-grid has to react to sudden load-changes, as it will occur for example during a start-up-phase or a shut-down-phase of machines of large consumers with a strong inductive or capacitive behaviour. For example the start up of big electrical motors may result in a sudden load change.

Additionally there are increasing numbers of wind-turbines or wind-power-farms, which are connected with the power-grid, feeding in time-dependent output-power to the grid. These systems are also connected to the grid via inverter-systems.

These facts results in changed characteristics of the grid, especially the robustness of the power-grid, used for power-transmission and power-distribution, will become weaker and less reliable.

The inverter-systems, which are used to connect power-systems with the grid, show only a small overload capability, to balance load-changes. Typical inverter-systems provide approximately 1.5 times (max.) of its rated power to the grid, which could be used for the compensation of load-changes.

In dependency from the load-changes this might lead to a reduced stiffness of the grid and to stability-problems.

It is therefore the aim of the invention, to provide an improved arrangement to stabilise a power-grid, which is fed to a certain extend by power-systems, being coupled with the grid via inverter-systems.

This aim is solved by the features of claim 1. Preferred embodiments are object of the dependent claims.

According to the invention a power-grid is coupled with a power-system via an inverter-system. The power-system feeds in electrical power into the grid, when needed. A synchronous generator is connected with the grid. The synchronous generator is designed to compensate sudden load-changes of the grid.

According to the invention the grid is stabilised by the synchronous generator, as a synchronous generator shows an extreme high robustness and a short-time overload capability of a factor from 2 up to a factor of 8 of the rated power. Because of this behaviour sudden load changes are compensated by the generator.

The inventive arrangement is especially advantageous, if the power-grid is fed completely or even to a certain extend by power-systems, which are coupled via inverter-systems with the grid.

It is also possible to compensate fluctuations of power-systems, which comprises a wind-turbine or a wind-farm or a photovoltaic power-plant or a fuel-cell power-plant. These systems deliver time-dependent output-power to the grid, via inverter-systems.

The synchronous generator is part of an energy-storage-system in a preferred embodiment - as described by help of the figures.

The invention allows the increase the share of inverter coupled power-systems to the grid, which is up to now limited due to stability constrains.

The invention improves the grid stability.

The invention is shown in more detail by help of two figures.
- FIG 1: shows a exemplary basic block diagram of the invention, and
- FIG 2: shows an exemplary coupling of the generator.

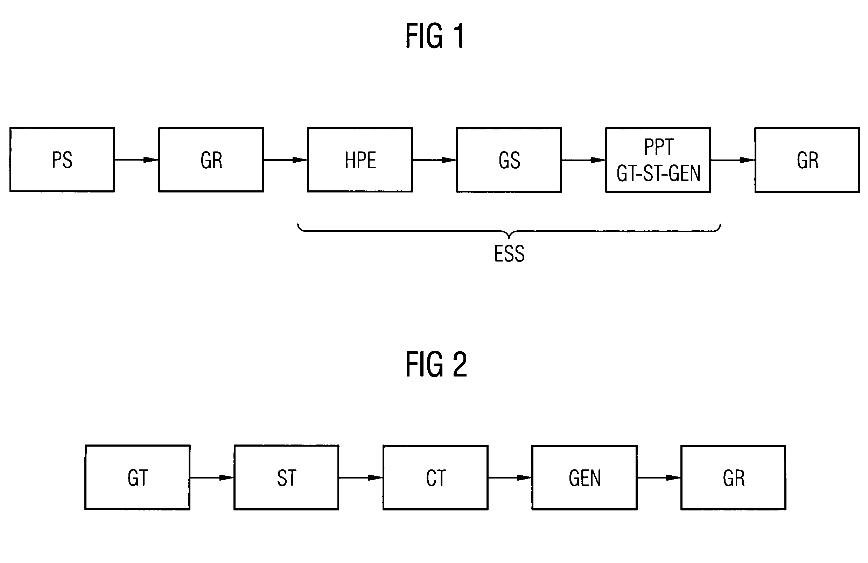

FIG 1 shows an exemplary block-diagram of the invention.
A wind-power-plant is used as power-system PS, which supplies time-dependent output-power to a grid GR via an inverter-system.

A certain amount of unengaged electrical power is brought to an energy storage-system ESS, which comprises a high-pressure-electrolyser HPE, a hydrogen gas-storage GS and a power-plant PPT. The electrolyser HPE is connected to the hydrogen gas-storage GS. The hydrogen gas-storage GS is connected to the power plant PPT.

The surplus electrical power is delivered to the electrolyser HPE, while the electrolyser HPE decomposes water into oxygen and hydrogen gas by help of the delivered power.

The hydrogen gas is stored at the hydrogen gas-storage GS and can be supplied to a gas-turbine GT, which is part of the power-plant PPT. The gas turbine GT is used to convert the chemical energy of the hydrogen back into electricity via a synchronous generator.

The exhaust heat of the gas turbine GT is used to generate steam, which is provided to a steam turbine, also delivering mechanical power to the synchronous generator, for example, or to another synchronous generator.

The steam-turbine and the gas-turbine GT are coupled via a shaft with a synchronous generator GEN of the power-plant PPT. The system can be setup as such that each turbine GT, ST is connected to a dedicated synchronous generator or that both turbines GT, ST are connected to the same synchronous generator. Both turbines GT, ST are used to drive the generator GEN to produce electrical power for the grid GR as needed.

FIG 2 shows an exemplary coupling of the generator GEN according to the invention.

The generator GEN is connected with the gas-turbine GT and the steam-turbine ST of the energy-storage-system via a clutch CT.

The clutch CT is operated in two different modes, called "Discharge Mode" and "Grid Support Mode".

If the clutch CT is open, the synchronous generator GEN is allowed to operate in "grid support mode" where it absorbs or injects power during sudden load changes. In "gird support mode" the synchronous generator of the energy storage is used to stabilize the grid.

If the clutch CT is closed, the generator GEN is able to feed in additional power into the grid GR from the energy-storage-system ESS as needed. This operation mode of the energy-storage-system EES can be named as "discharge mode". The characteristic of the energy-storage-system EES is similar to a conventional power natural gas power plant.

In a preferred embodiment the clutch CT is built to connect or disconnect the generator GEN during its full speed.

In a preferred embodiment the generator GEN is built as a rotating electrical generator.

By help of the clutch CT the generator GEN is mechanically connected or disconnected from the turbines ST, GT in this example.

In a preferred embodiment there is also a control system, which controls the coupling or decoupling as described above. It may also do the power-management for the power-delivery to the grid GR.

Inverter-systems do not provide the same inertia to the grid as rotating electrical generators. Because of this, the inertia of the electrical generator is used to stabilize the grid.

A high inertia - as shown by the generator - reduces frequency perturbations of the grid.

This frequency perturbation may occur typically during a start-up-phase or a shut-down-phase of machines of large consumers.

The invention uses the rotating electrical generator, which is typically used by energy storage systems like the so called "hydrogen energy storage systems" as described above or like the so called "compressed air energy storage systems".

## Claims

1. Arrangement to stabilise a grid,
- where the grid is coupled with a power-system via an inverter-system, while the power-system feeds in electrical power into the grid when needed,
**characterised in,**
- **that** a synchronous generator is connected with the grid, and
- **that** the synchronous generator is designed to compensate sudden load-changes of the grid.

2. Arrangement according to claim 1, **characterised in that** the synchronous generator is the generator of an energy-storage-system.

3. Arrangement according to claim 2, **characterised in**
- **that** the generator is connected with the energy-storage-system by a clutch,
- **that** the clutch is open to allow the generator to compensate load-changes as synchronous generator,
- **that** the clutch is closed to allow the generator to feed in additional power into the grid from the energy-storage-system if needed.

4. Arrangement according to claim 3, **characterised in that** the clutch is built to connect or disconnect the generator during full speed of the generator.

5. Arrangement according to claim 2 or 3, **characterised in**
- **that** the energy storage-system comprises an electrolyser, a hydrogen gas-storage and a power-plant,
- **that** the electrolyser is connected to the hydrogen gas-storage,
- **that** the hydrogen gas-storage is connected to the power plant,
- **that** the generator is assigned to the power-plant,
- **that** the power-plant comprises a steam-turbine and/or a gas-turbine, which are coupled via a shaft with a common generator or with individual generators,
- while surplus electrical power is delivered to the electrolyser, while the electrolyser decomposes water into oxygen and hydrogen gas by help of the surplus electrical power, while the hydrogen gas is stored at the hydrogen gas-storage, while the stored hydrogen gas is supplied to the gas-turbine, which is used to provide mechanical power and exhaust heat and which is used to generate steam for a steam turbine and to drive the generator, while the steam is supplied to the steam-turbine, which is also used to drive the same or a different generator and while the generator produces electrical power for the grid.

6. Arrangement according to claim 1, where the generator is a rotating electrical generator.

7. Arrangement according to claim 1, **characterised in that** the power-system comprises a wind-turbine or a wind-farm or a photovoltaic power-plant or a fuel-cell power-plant, which delivers a time-dependent output-power to the grid.

8. Arrangement according to claim 1, **characterised in**
- **that** the generator is connected with an auxiliary motor, which is used to overcome inner losses of the generator, and/or
- **that** the generator comprises an rotating inertia to provide additional grid stabilization capabilities of the generator.
